# FASCICULE DE BREVET EUROPEEN

(11) **EP 1 759 233 B1**
(45) Date de publication et mention de la délivrance du brevet: **07.05.2008**
(21) Numéro de dépôt: 05778899.4
(22) Date de dépôt: 22.06.2005
(51) Int. Cl.: G02B 6/52, H02G 1/08

(54) **ENTRAINEUR DE MICRO-CABLE OPTIQUE D'ENCOMBREMENT REDUIT**
KLEINE MIKROKABELVERLEGUNGSVORRICHTUNG
SMALL-SIZED MICRO-CABLE-LAYING DEVICE

(30) Priorité: 24.06.2004 FR 0406900
(43) Date de publication de la demande: 07.03.2007
(73) Titulaire: France Telecom S.A., 75505 Paris Cedex (FR)
(72) Inventeur: LECOQ, Daniel, F-22140 BERTHET (FR); VILLALON, Céline, F-44600 SAINT NAZAIRE (FR); REAU-THOMAS, Anne-Cécile, F-22560 PLEUMEUR-BODOU (FR)
(74) Mandataire: Delumeau, François Guy
(86) Numéro de dépôt international: PCT/FR2005/001565
(87) Numéro de publication internationale: WO 2006/010813

(56) Documents cités:
- FR-A- 2 774 777
- GB-A- 2 388 966

## Description

L'invention concerne les entraîneurs de micro-câbles optiques pour le câblage, notamment intérieur aux immeubles.

Ces entraîneurs de micro-câbles trouvent leur application dans la pose de câbles par soufflage, poussage, tirage. Leur utilisation est également possible en portage, en aiguillage, en poussage seul, etc.

Pour ce type d'application, qui consiste notamment à introduire un câble optique dans une gaine creuse, deux types de matériel de pose existent sur le marché.

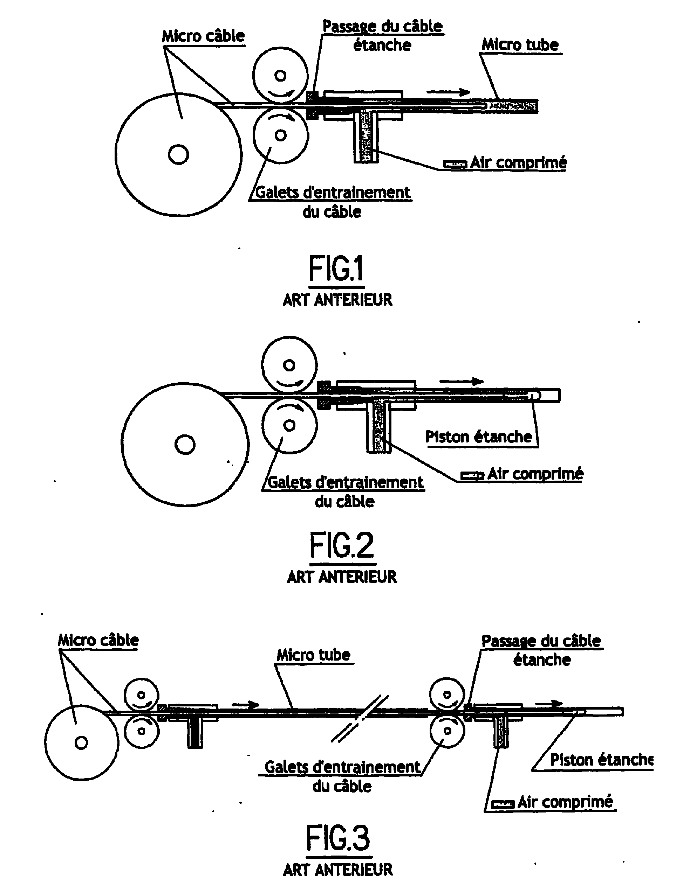

Un premier type d'appareil de pose repose sur le principe du portage (figure 1). Ces appareils exercent pour cela une avance du câble par flux d'air.

Les appareils de pose par soufflage tirage (figure 2) exercent quant à eux une avance de câble par pression d'air en tête de câble sur un piston et par poussage par rotation de galets.

On a déjà proposé un type d'appareil de pose tel que représenté à la figure 1, permettant de mettre en place des câblages optiques de différents types, notamment en souterrain, en adduction d'immeuble, mais difficilement en immeuble car l'espacement entre le système d'injection d'air et les galets d'entraînement rend l'appareil encombrant.

Pour chaque type de pose à réaliser, le câble à poser est spécifique en termes de diamètre et de rigidité.

Le câble posé en souterrain par exemple a un diamètre plus important qu'un câble d'immeuble.

Les caractéristiques dimensionnelles et mécaniques de l'appareil de pose ici évoqué ne sont, ainsi, pas adaptées pour une pose spécifique dans les immeubles où les espaces de travail sont très réduits.

La pose de câbles optiques dans les immeubles peut de plus nécessiter certaines interventions dans les chemins de câbles de l'immeuble, notamment nécessiter une cascade de tels appareils de pose en série sur le câble (figure 3). La cascade consiste à mettre en place un deuxième appareil de pose en ligne pour augmenter les performances de pose dans le cas où le système est limité.

L'appareil décrit dans le brevet FR 2 774 777 intègre le système d'injection d'air en amont des galets d'entraînement qui sont de ce fait placés dans un volume étanche. Lors d'une cascade, il faut ouvrir l'appareil ci-dessus mentionné pour permettre la mise en place du câble. Lorsque l'on referme l'appareil, on se trouve typiquement confronté à des problèmes d'étanchéité : un joint, pourtant nécessaire avec ce dispositif, ne se repositionne pas bien dans son logement, ce qui créé des fuites d'air.

Ce type d'appareil connu, qui n'est pas dimensionné pour l'immeuble en particulier, ne peut, de plus, pas toujours être installé dans les chemins de câbles. De plus, ce type d'appareil n'apporte pas une simplicité de manipulation à l'installateur. En effet, de par son encombrement et son poids, ce type d'appareil n'est pas maniable.

Le but de l'invention est de proposer un appareil de pose de câble optique, par soufflage, tirage ou poussage qui permette une simplification des manipulations, en particulier la mise en place du câble entre les galets et en extrémité de tube sans intervention sur l'étanchéité, une mise en cascade de l'appareil, et qui soit adapté à la pose de câbles en immeubles.

Ce but est atteint selon l'invention grâce à un appareil de pose de câble optique comprenant des moyens de fixation d'un moteur rotatif, au moins un galet d'entraînement par friction sur le câble, une arrivée d'air comprimé pour l'entraînement du câble, caractérisé en ce que les moyens de fixation du moteur, ledit au moins un galet et l'arrivée d'air comprimé sont disposés de telle sorte que l'axe du moteur, la direction d'arrivée d'air comprimé et le câble entraîné par le galet se trouvent sensiblement parallèles les uns aux autres.

D'autres caractéristiques, buts et avantages de l'invention apparaîtront à la lecture de la description détaillée qui va suivre, faite en référence aux figures annexées sur lesquelles :
- la figure 1 représente un dispositif de pose par portage conforme à l'art antérieur ;
- la figure 2 représente un dispositif de pose par soufflage-tirage conforme à l'art antérieur ;
- la figure 3 représente une cascade de deux dispositifs de soufflage-tirage conformes à l'art antérieur ;
- la figure 4 représente en perspective une tête d'un dispositif de pose conforme à une première variante de l'invention ;
- la figure 5 représente ce même dispositif de pose, en vue d'ensemble ;
- la figure 6 est une vue détaillée d'une tête de pose de ce même dispositif, munie de son carter ;
- la figure 7 est une vue schématique du dispositif selon cette même variante ;
- les figures 8 et 9 sont des vues en perspective d'un organe de commande de ce même dispositif, en positions respectivement inactive et active.

L'appareil présenté ici est un appareil adapté à l'immeuble. Il transmet le mouvement au câble tout en assurant sa protection.

La conception et le choix des éléments de l'appareil ont été réalisés pour obtenir un appareil le moins encombrant possible.

L'appareil de pose présente de plus un poids moindre qui permet une manutention et une utilisation aisée.

L'appareil de pose peut être ainsi utilisé dans des chemins de câbles présentant de faibles dimensions, et/ou chemin de câble étant peu accessible.

II est ici conçu avec une alimentation électrique par batterie interchangeable sous la forme d'un corps de visseuse de type outillage manuel courant.

Le corps de visseuse 10 est maintenu sur un organe support 20 du dispositif, jouant le rôle de fixation en place du moteur, ici sous la forme 30 d'un organe 22 en U venant produire un pincement sur deux flancs droits de la visseuse. Cet organe en U empêche alors la rotation de la visseuse lorsque cette dernière rencontre une réaction des différents organes tournants entraînés.

On notera qu'une telle visseuse 10 peut être remplacée dans le cadre de l'invention, par un corps de perceuse habituel, à renvoi de poignée latérale. On prévoit également une variante faisant appel à une visseuse dont la poignée peut être pliée transversalement à la direction de l'axe rotatif de celle-ci.

La chaîne cinématique est en outre la suivante. Le mouvement est transmis de la visseuse 10 à l'appareil par un embout de visseuse 12 qui se fixe sur un limiteur de couple 30.

L'embout 12 de l'appareil de pose permet la transmission du mouvement entre l'alimentation et le système de transmission, même avec un certain angle d'inclinaison de l'alimentation.

Le système est pour cela muni d'une interface 15 entre la visseuse 10 et le limiteur de couple 30 qui est constitué d'un embout de type clef 16 alêne permettant la transmission du mouvement à différents stades d'inclinaison de l'alimentation.

Un organe de maintien est utilisé pour empêcher un mouvement inapproprié des éléments.

La tête de visseuse est donc ici sous une forme creuse, hexagonale, correspondant à une cavité pour clé alêne. La tête d'entraînement du limiteur de couple 30 venant coopérer avec la visseuse 10 est elle-même sous la forme d'une clé alêne, c'est-à-dire à section hexagonale. Toutefois, cette tête présente un certain arrondi à son extrémité, c'est-à-dire une absence d'arêtes strictes en bordure de la section hexagonale, ce qui autorise un certain décalage angulaire entre l'axe de la visseuse et l'axe de l'arbre complémentaire.

En effet, une tête arrondie telle que la tête 16 permet un entraînement en rotation malgré le non-alignement strict des deux arbres pivotants associés; à savoir l'arbre entraîné et l'arbre de la visseuse.

Le limiteur de couple 30 est ici de type magnétique à poudre, connu en soi.

Le mouvement de rotation est ensuite transmis du limiteur de couple 30 à un module de renvoi d'angle 40, la liaison entre les deux axes étant réalisée par un organe d'accouplement 50.

Sur l'arbre sortant du renvoi d'angle est fixé un galet appelé galet moteur 60.

On vient positionner un second galet 70, appelé galet presseur et compteur, contre ce galet moteur 60. Le galet presseur 70, monté sur un système d'écrasement 80, vient s'écraser à la valeur réglée par ce système. On décrira ci-après les, moyens de réglage correspondants.

On prévoit ici un dispositif de réglage en serrage 80 des galets 60 et 70 qui est muni d'une molette de réglage 91, par pas de vis, de la pression exercée sur le galet 70 qui est transversalement mobile vers le galet 60 à axe fixe situé à l'opposé.

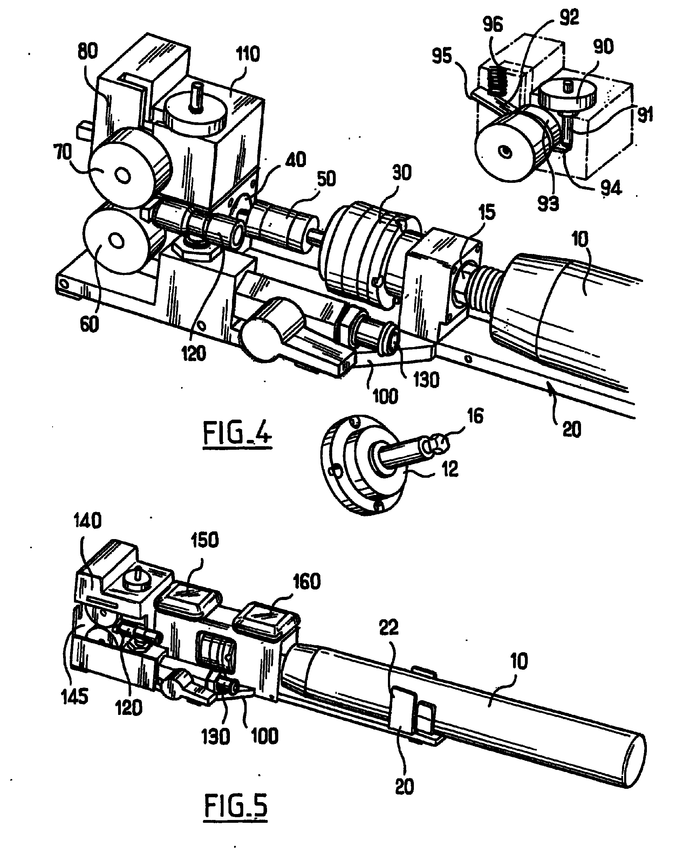

Ce dispositif, représenté en particulier sur la figure 4, présente un appui repoussant l'axe du galet 70 vers le galet opposé 60. Cet appui se présente sous la forme d'un levier 92 dont le centre 93 produit cette force d'appui, tandis que les extrémités 94 et 95 du levier viennent chacune s'appuyer sur un appui correspondant situé de manière opposée par rapport à l'axe du galet 70.

Ce dédoublement de forces permet de diminuer le dimensionnement des éléments du système et donc de permettre un encombrement réduit. Ainsi, une des extrémités 92 vient coopérer avec un ressort hélicoïdal 95 repoussant le levier vers le câble. L'autre extrémité du levier vient quant à elle coopérer avec la tête de la vis dont l'avancement en appui est réglé par la molette 91 précitée. Ainsi, la molette 91 génère une force d'appui choisie, et le ressort hélicoïdal 95 autorise toutefois un déplacement du galet 70 vers le haut, notamment à la mise en place du câble.

Cet ensemble de réglage de force de serrage est disposé sur un module séparable du reste du dispositif pose-câble. La présence du ressort hélicoïdal 95 permet donc de décaler les galets 60 et 70 pour la mise en place du câble, sans avoir à actionner la molette 91 et ainsi sans avoir à dérégler le degré de serrage en présence.

L'ensemble est maintenu à divers endroits sur une plaque support 100. Un système de centrage 110 est réalisé pour positionner correctement le renvoi d'angle, le système d'écrasement et une paire de cales.

L'injection d'air est quant à elle réalisée par un système fixé sur la plaque support 100.

On prévoit ici un raccord 120 d'arrivée d'air comprimé sous la forme d'une conduite en T, dont la base verticale rejoint l'embout 130 d'arrivée d'air comprimé à la perpendiculaire de cette dernière. Cette même base verticale est montée de manière mobile en pivotement, de sorte que les deux branches horizontales du T sont aptes à pivoter, notamment pour rejoindre, à partir de la direction générale de l'ensemble, une direction perpendiculaire au dispositif.

Dans sa position perpendiculaire, les deux branches horizontales du T, formant le passage du câble avant introduction dans le tube, ne débouchent pas en regard des galets 60 et 70, mais restent libres de tout encombrement à chacune de leurs extrémités. L'introduction du câble se veut donc beaucoup plus aisée dans cette disposition, et permet notamment l'introduction d'un câble prééquipé en férule, tétine et piston.

Une fois le câble ainsi introduit, le raccord 120 en forme de T est pivoté pour introduire la partie courante du câble entre les deux galets 60 et 70 et venir placer le piston à l'ouverture du tube à équiper.

Cette procédure d'introduction facilite notablement la mise en place du pose-câble en présence.

Ces moyens permettent ainsi de venir mettre en place la tétine d'un câble pré-équipé, seul élément à ne pas passer alors dans le raccord 120 décrit ci-avant, en position aval à ce raccord, avant de venir placer le câble entre les galets. En effet, ce raccord étant particulièrement proche des galets, la mise en place d'une tétine dans ce raccord serait difficile en l'absence d'une telle aptitude à pivoter.

On préconise avantageusement la présence sur le câble d'un piston étanche venant recevoir la poussée de l'air comprimé. Une férule maintient le piston sur la tête de câble.

Une tétine vient boucher le raccord 120 en T en amont de l'arrivée d'air comprimé. Un tube recevant le câble est associé au raccord en T en aval direct de ce dernier.

L'introduction du câble dans le dispositif peut également être réalisée sans pour autant pivoter le raccord en T jusqu'à la perpendiculaire. En effet, un simple décalage oblique peut suffire à une telle mise en place avant serrage dans les galets et avant introduction dans le tube.

Ainsi, un accès d'air pivotant permet de glisser facilement le câble dans le tube. Glisser un ensemble câble+piston+férule+tétine d'étanchéité sera possible avec ce raccord pivotant.

Une coque 140 protège l'appareil des chocs et de la poussière. Des compteurs 150 et 160 sont positionnés sur cette coque et mesurent la longueur de câble posée et la vitesse de pose. Un système de mesure de ces paramètres est monté sur l'appareil et relié à ces compteurs.

Un renvoi d'angle 55 de type à engrenages coniques à 90° permet un changement du sens de pose du câble.

Ce renvoi d'angle 55 permet le positionnement de l'appareil dans un chemin de câble.

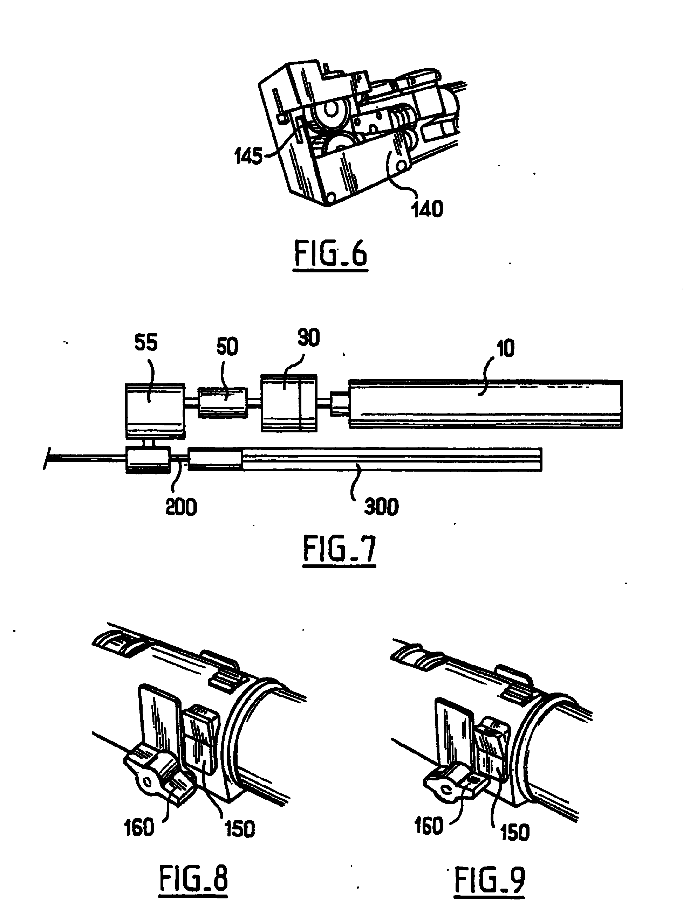

Tel qu'illustré sur la figure 7, l'axe, donc également ici le corps, du moteur d'entraînement 10 est disposé parallèlement au câble 200 et au tube 300 devant recevoir ce câble, de telle sorte que ces éléments longitudinaux, disposés ainsi parallèlement l'un à l'autre, se présentent sous un encombrement minimal.

De plus, et conformément à la présente variante, l'arrivée 130 d'air comprimé est également disposée à l'entrée du dispositif selon une direction parallèle à l'axe du moteur tournant. Cette arrivée se présente ici sous la forme d'un insert creux destiné à recevoir une conduite souple.

Ainsi, la partie de la conduite d'air comprimé s'inscrit également, à proximité de l'appareil, dans la direction générale de l'appareil, remplissant ainsi un encombrement minimal.

L'alignement de ces éléments 10, 60, 70 et 130 permet une disposition d'ensemble du dispositif qui l'autorise à être placé dans les endroits les plus exigus.

La plaque support 100 permet la tenue mécanique de l'ensemble de ces éléments. La coque 140 laisse un accès aux différents éléments nécessaires aux réglages et à la pose du câble.

L'appareil permet ainsi d'avoir un accès direct aux galets 60 et 70.

La coque 140 entourant l'ensemble des organes d'entraînement de ce pose-câble est pour cela ouverte selon une fenêtre longitudinale 145 découvrant les parties actives de chacun des galets, et notamment la partie intermédiaire située entre ceux-ci.

L'appareil est également plus facile d'utilisation puisque l'on peut accéder aux galets directement (pas de coque étanche).

L'appareil est en outre équipé d'un guide-câble qui accède directement sur les galets.

Cette accessibilité permet de glisser facilement le câble entre les galets 60 et 70 dans toutes les situations de pose. Cet atout permet de plus d'utiliser un câble 200 pré-équipé : la mise en place du piston, de la férule et de la tétine d'étanchéité peut être effectuée en usine ou avant le déplacement sur le terrain.

L'appareil de pose peut être muni d'un système pour accrocher l'appareil sur ou dans les chemins de câbles (systèmes de crochets, plaque magnétique). On peut facilement utiliser cet appareil en cascade.

Le système est également muni d'une bague qui retient la visseuse en rotation.

La conception de l'appareil permet en outre de bloquer la mise en marche de l'alimentation lors de la pose et donc de réaliser d'autres manipulations en simultané.

Le présent dispositif est pour cela muni d'un système de maintien sans action manuelle maintenue. En d'autres termes, le dispositif est prévu pour être placé en position active, et maintenue active tout en laissant les mains libres à l'utilisateur.

Le présent dispositif étant ici muni d'un commutateur 150 de type à enfoncement manuel, on le dote, à proximité directe de ce poussoir, d'un organe pivotant 160 dont l'extrémité mobile peut être placée en deux positions différentes, l'une décalée latéralement du bouton-poussoir 150, l'autre en appui sur ce même bouton-poussoir 150. Un tel dispositif est donc actionné après mise en route du moteur d'entraînement, par déplacement de cet organe de maintien 160 en appui direct sur le bouton-poussoir 150, qui, ainsi, reste en position enfoncée.

L'appareil apporte une solution technique, notamment en ce qui concerne la simplification des manipulations. En effet, on peut manier l'appareil facilement grâce à son encombrement réduit, son poids faible et son ergonomie.

## Revendications

1. Appareil de pose de câble optique comprenant des moyens de fixation d'un moteur rotatif (10), au moins un galet d'entraînement (60, 70) par friction sur le câble (200), une arrivée (130) d'air comprimé pour l'entraînement du câble (200), **caractérisé en ce que** les moyens de fixation du moteur, ledit au moins un galet (60, 70) et l'arrivée d'air comprimé (130) sont disposés de telle sorte que l'axe du moteur (10), la direction d'arrivée d'air comprimé (130) et le câble (200) entraîné par le galet (60, 70) se trouvent sensiblement parallèles les uns aux autres.

2. Dispositif selon la revendication 1, **caractérisé en ce que** les moyens de fixation (20) du moteur rotatif (10) amovible et maintenu en rotation une fois en place sont des moyens de fixation provisoire.

3. Appareil selon l'une quelconque des revendications précédentes, **caractérisé en ce que** l'arrivée d'air comprimé (130) est constituée par une portion creuse (120) prévue pour être associée à une ligne d'approvisionnement en air comprimé.

4. Appareil selon l'une quelconque des revendications précédentes, **caractérisé en ce qu'**il présente deux galets (60, 70) de friction à serrage de câble et un dispositif de serrage associé à l'un au moins de ces galets (60, 70), ce dispositif de serrage étant constitué d'un levier (92, 93) dont l'appui central (93) agit sur l'axe du galet (70) et dont les deux extrémités opposées coopèrent respectivement avec un élément à réaction élastique et avec un élément à déplacement réglable (91).

5. Appareil selon l'une quelconque des revendications précédentes, **caractérisé en ce que** le moteur rotatif (10) est associé de manière libérable avec une pièce entraînée en rotation (12, 16), par des moyens complémentaires permettant un décalage angulaire entre le moteur et cette pièce entraînée, sans s'opposer à une transmission de la rotation.

6. Appareil selon la revendication précédente, **caractérisé en ce que** les moyens de transmission de rotation sont constitués par deux éléments emboîtés l'un dans l'autre, dont l'un au moins (16) présente des parois qui sont arrondies dans un sens tel que ces parois latérales s'écartent et/ou se rapprochent lorsque parcourues dans le sens longitudinal de l'axe géométrique de l'élément.

7. Appareil selon l'une quelconque des revendications précédentes, **caractérisé en ce qu'**il comprend un raccord de transmission d'air comprimé (120) se présentant sous la forme d'un T dont les branches horizontales, destinées à recevoir le câble (200), sont pivotables autour de l'axe constitué par la branche verticale du T, de sorte que les branches horizontales sont, après pivotement, dégagées d'obstacles empêchant une introduction du câble dans ces branches horizontales.

8. Appareil selon la revendication précédente, **caractérisé en ce que** le raccord en T (120) est placé en aval direct dudit au moins un galet (60, 70) d'entraînement du câble et en amont direct d'un emplacement de maintien de tube (300) à équiper du câble optique (200).

9. Appareil selon l'une quelconque des revendications précédentes, **caractérisé en ce qu'**il comprend des moyens de blocage (160) en position actionnée d'un commutateur manuel (150) de mise en route du moteur rotatif.

10. Appareil selon la revendication précédente, **caractérisé en ce qu'**il comprend un bouton-poussoir (150) d'alimentation du moteur rotatif, et un organe déplaçable (160) exerçant, en une première position, un appui stable sur le bouton-poussoir (150) et se trouvant, en une deuxième position, dégagé vis-à-vis de ce bouton-poussoir (150).

## Claims

1. Apparatus for laying optical cable comprising means of attachment of a rotary motor (10), at least one drive roller (60, 70) which drives by friction against the cable (200), a compressed air inlet (130) for driving the cable (200), **characterized in that** the means of attaching the motor, said at least one roller (60, 70) and the compressed air inlet (130) are arranged in such a way that the axis of the motor (10), the direction of arrival of compressed air (130) and the cable (200) driven by the roller (60, 70) are substantially parallel to one another.

2. Apparatus according to Claim 1, **characterized in that** the means (20) of attachment of the removable rotary meter (10) which is held in terms of rotation once in situ are means of temporary attachment.

3. Apparatus according to either one of the preceding claims, **characterized in that** the compressed air inlet (130) consists of a hollow portion (120) designed to be associated with a compressed air supply line.

4. Apparatus according to any one of the preceding claims, **characterized in that** it has two cable clamping friction rollers (60, 70) and one clamping devise associated with at least one of these rollers (60, 70), this dripping device consisting of a lever (92, 93) the central support (93) of which acts on the axis of the roller (70) and the two opposite ends of which cooperate, one with an elastic reaction element and the other with an element (91) the movement of which can be adjusted.

5. apparatus according to any one of the preceding claims, **characterized in that** the rotary motor (10) is associated releasably with a rotationally driven component (12, 16), by complementary means that allow an angular offset between the motor, and this driven component, without preventing the rotation from being transmitted

6. Apparatus according to the preceding, claim, **characterized in that** the rotation transmitting means consist of two elements nested one inside the other, of which at least one (16) has walls which are rounded in a direction such that these side walls diverge and/ or converge when travelled in the longitudinal direction of the geometric axis of the element.

7. Apparatus according to any one of the preceding claims, **characterized in that** it comprises a compressed air transmission coupling (120) in the shape of a T of which the horizontal 1 branches, intended to accept the cable (200) can be pivoted about the axis formed by the vertical branch of the T such that, after pivoting, the horizontal branches are freed of obstacles that will prevent the cable from being introduced into these horizontal branches.

8. Apparatus according to the preceding claim, **characterized in that** the T-shaped coupling (120) is positioned directly downstream of said at least one cable drive roller (60, 70) and directly upstream of a location for holding the tube (300) chat is to be equipped with the optical cable (200).

9. Apparatus according to any one of the preceding claims, **characterized in that** it comprises means (160) for locking in the actuated position a manual switch (150) used to switch on the rotary motor.

10. Apparatus according to the preceding claim, **characterized in that** it comprises a pushbutton (150) for powering the rotary motor and a moveable member (160) which, in a first position, rests in member (160) which, in a first position, rests in a stable manner against the pushbutton (150) and, in a second position, is disengaged, from this pushbutton. (150).

## Patentansprüche

1. Verlegungsgerät für ein Lichtleiterkabel, das Befestigungsmittel für einen Umlaufmotor (10), mindestens eine Reibungsantriebsrolle (60, 70) auf dem Kabel (200) eine Druckluftzufuhr (130) für den Antrieb des Kabels (200) aufweist, **dadurch gekennzeichnet, dass** die Befestigungsmittel des Motors, die mindestens eine Rolle (60, 70) und die Druckluftzufuhr (130) so angeordnet sind, dass die Achse des Motors (10), die Richtung der Druckluftzufuhr (130) und das von der Rolle (60, 70) angetriebene Kabel (200) sich im Wesentlichen parallel zueinander befinden.

2. Gerät nach. Anspruch 1, **dadurch gekennzeichnet, dass** die Befestigungsmittel (20) des Umlaufmotors (10), der lösbar ist und, wenn er eingesetzt ist, in Drehung gehalten wird, provisorische Befestigungsmittel sind.

3. Gerät nach einem der vorhergehenden, Ansprüche, **dadurch gekennzeichnet, dass** die Druckluftzufuhr (130) aus einem hohlen abschnitt (120) besteht, der vorgesehen ist, um einer Druckluftversorgungsleitung zugeordnet, zu werden.

4. Gerät nach einem der vorhergehenden Ansprüche, **dadurch gekennzeichnet, dass** es zwei Reibungsrollen (60, 70) mit Kabelklemmung und eine Klemmvorrichtung aufweist, die mindestens einer dieser Rollen (60, 70) zugeordnet ist, wobei diese Klemmvorrichtung aus einem Hobel (92, 93) besteht, dessen zentrale Auflage (93) auf die Achse der Rolle (70) einwirkt, und dessen zwei entgegengesetzte Enden je mit einem Element mit elastischer Reaktion bzw, mit einem Element mit einstellbarer Verschiebung (91) zusammenwirken.

5. Gerät nach einem der vorhergehenden Ansprüche, **dadurch gekennzeichnet, dass** der Umlaufmotor (10) freisetzbar einem in Drehung versetzten Bauteil (12, 16) zugeordnet ist, durch komplementare Mittel, die eine Winkelverschiebung zwischen dem Motor und diesem angetriebenen Bauteil erlauben, ohne einer Übertragung der Drehung entgegen zu wirken.

6. Gerät nach dem vorhergehenden Anspruch, **dadurch gekennzeichnet, dass** die Drehungsübertragungsmittel aus zwei ineinandergefügten Elementen, bestehen, von denen mindestens eines (16) Wände aufweist, die in einer derartigen Richtung abgerundet sind, dass diese Seitenwände sich voneinander entfernen und/oder einander annäbern, wenn Sie in der Längsrichtung der geometrischen Achse des Elements durchlaufen werden.

7. Gerät nach einem der vorhergehenden Ansprüche, **dadurch gekennzeichnet, dass** es einen Druckluftübertragungsanschluss (120) aufweist, der die Form eines T hat., dessen waagrechte Zweige, die dazu bestimmt sind, das Kabel (200) aufzunehmen, um die Achse schwenkbar sind, die von dem senkrechten zweig des T gebildet wird, so dass die waagrechten Zweige nach dem Schwenken von Hindernissen gelöst sind, die eine Einführung des Kabels in diese waagrechten zweige verhindern

8. Gerät nach dem vorhergehenden Anspruch, **dadurch gekennzeichnet, dass** der T-Anschluss (120) direkt hinter der mindestens einen Antriebsrolle (60, 70) des Kabels und direkt vor einer Stelle für den Halt, eines Rohrs (300) angeordnet ist, das mit dem Lichtleiterkabel (200) ausgestattet werden soll.

9. Gerät nach einem der vorhergehenden Ansprüche, **dadurch gekennzeichnet, dass** es Mittel (160) zur Blockierung eines Handschalters (150) für den Start, des Ümlaufmotors in der betätigten Stellung aufweist.

10. Gerät nach dem Vörhergehenden Anspruch, **dadurch gekennzeichnet, dass** es einen Druckknopf (150) zur Speisung des Ümlaufmotors und ein verschiebbares Organ (160) aufweist, das in einer ersten Stellung eine stabile Auflage auf den Druckknopf (150) ausübt und sich in einer zweiten Stellung gelöst gegenüber diesem Druckknopf (150) befindet,
